# EUROPÄISCHE PATENTSCHRIFT

(11) **EP 3 401 613 B1**
(45) Veröffentlichungstag und Bekanntmachung des Hinweises auf die Patenterteilung: **16.09.2020**
(21) Anmeldenummer: 18161481.9
(22) Anmeldetag: 13.03.2018
(51) Int. Cl.: F24F 13/02, F16L 9/00, F16L 9/22

(54) **ABLUFTKANALANORDNUNG FÜR EIN KÜCHENABLUFTSYSTEM UND FUSSBODEN MIT EINER SOLCHEN ABLUFTANORDNUNG**
VENTILATION CHANNEL ASSEMBLY FOR A KITCHEN EXHAUST SYSTEM AND FLOOR WITH SAID VENTILATION CHANNEL ASSEMBLY
DISPOSITIF DE CONDUIT D'ÉVACUATION D'AIR POUR UN SYSTÈME DE CONDUIT D'ÉVACUATION D'AIR POUR CUISINE ET PLANCHER AVEC LEDIT DISPOSITIF DE CONDUIT D'ÉVACUATION D'AIR

(30) Priorität: 09.05.2017 DE 202017102758 U
(43) Veröffentlichungstag der Anmeldung: 14.11.2018
(73) Patentinhaber: Naber Holding GmbH & Co. KG, 48529 Nordhorn (DE)
(72) Erfinder: Naber, Hans-Joachim, 48527 Nordhorn (DE)
(74) Vertreter: Angerhausen, Christoph

(56) Entgegenhaltungen:
- EP-A2- 0 816 770
- US-A- 2 164 394

## Beschreibung

Die Erfindung geht aus von einer Abluftkanalanordnung für ein Küchenabluftkanalsystem, die aus einem Blechrohr und einer im Innern des Blechrohrs entlang der Längsrichtung des Blechrohrs verschieblich aufgenommenen Stützstruktur besteht, über die zwei gegenüber liegende Wandabschnitte des Blechrohrs gegeneinander abgestützt sind, wobei die Stützstruktur einen ersten und einen zweiten Anlageabschnitt aufweist, die jeweils über einen Formschluss am Innenumfang des Blechrohrs anliegen. Eine derartige Abluftkanalanordnung ist in der US 2,164,394 A beschrieben. Ähnliche Abluftkanalanordnungen beschreiben auch dieJP 4989426 B2, die EP 0 816 770 B2, die US 2,180,644 A, die DE 10 2007 034 595 B3 und die KR 10-2012-0055214 A.

Insbesondere um brandschutztechnischen Anforderungen zu genügen, ist es bei gattungsgemäßen Abluftkanalanordnungen häufig wünschenswert, dass diese nicht, wie im Stand der Technik hinreichend bekannt, als Kunststoffkanalsysteme ausgebildet sind, sondern aus Metall gefertigt sind. Um die gegenüber Kunststoffkanalsystemen höheren Kosten von Blechkanalsystemen soweit wie möglich zu reduzieren, wird angestrebt die Blechdicken der Ausgangsmaterialien, aus denen die Einzelkomponenten der Abluftkanalanordnung gefertigt sind, so gering wie möglich zu halten. Dies ist jedoch dadurch limitiert, dass die Abluftkanalanordnung eine gewisse mechanische Mindestfestigkeit aufweisen muss, einerseits um an den Verbindungsstellen der Einzelkomponenten eine fluidisch dichte Verbindung der Einzelkomponenten dauerhaft sicherzustellen und andererseits, um es zu ermöglichen, dass die Abluftkanalanordnung auch einer Trittbelastung standhält, beispielsweise wenn sie im oder am Fußboden eines Gebäudes verbaut ist. Dazu ist es aus dem oben zitierten Stand der Technik beispielsweise bekannt, die Außenwandungen einzelner Rohrabschnitte der Abluftkanalanordnung mit Verstärkungsrippen zu versehen. Damit diese unmittelbar in die Außenwandung der Abluftkanalanordnung eingebrachten Verstärkungsrippen jedoch die gewünschte Versteifungswirkung aufweisen, ist es wiederum erforderlich, dass die Wanddicke der Abluftkanalanordnung eine gewisse Mindestdicke übersteigt.

Es ist daher die Aufgabe der Erfindung, eine Abluftkanalanordnung der eingangs beschriebenen Art vorzuschlagen, welche auch bei sehr geringen Wandstärken eine hohe mechanische Festigkeit aufweist.

Diese Aufgabe wird durch eine Abluftkanalanordnung mit den Merkmalen des Anspruchs 1 gelöst. Der Anspruch 13 beschreibt einen entsprechenden Fußboden. Die abhängigen Ansprüche betreffen jeweils vorteilhafte Ausführungsformen der Erfindung.

Demgemäß ist vorgesehen, dass die Anlageabschnitte über einen Z-förmigen Abschnitt miteinander verbunden sind, wobei der Z-förmige Abschnitt eine erste und eine zweite Anbindungsprofilseite aufweist, wobei die erste Anbindungsprofilseite in den ersten Anlageabschnitt und die zweite Anbindungsprofilseite in den zweiten Anlageabschnitt übergeht..

Die Stützstruktur kann insbesondere dazu eingerichtet sein, nur bedarfsweise in das Blechrohr eingebracht zu werden, beispielsweise wenn besonders hohe Belastungen des Blechrohrs zu erwarten sind. Dies kann beispielsweise dann der Fall sein, wenn die Abluftkanalanordnung am oder im Fußboden, beispielsweise im Estrich eines Gebäudes eingegossen, verbaut werden soll. Die Stützstruktur kann insbesondere als ein von dem Blechrohr separat bereitgestelltes Bauteil sein. Dies ermöglicht es, dass die Stützstruktur auf den Grad der jeweils erforderlichen Verstärkung des Blechrohrs angepasst wird, beziehungsweise dass aus einer Mehrzahl Stützstrukturen unterschiedlicher Verstärkungswirkung eine jeweils geeignete ausgewählt wird Dazu kann beispielsweise die Materialstärke der Stützstruktur und/oder die Geometrie der Stützstruktur an die jeweils vorgefundenen Belastungsanforderungen angepasst sein.

Es kann auch vorgesehen sein, dass in dem Blechrohr der Abluftkanalanordnung bedarfsweise eine oder mehrere Stützstrukturen eingesetzt werden können. Wenn mehrere Stützstrukturen in dem Blechrohr aufgenommen sind, können diese unter einem Abstand zueinander angeordnet sein. Die Stützstruktur kann eine Geometrie in der Ebene senkrecht zur Längsrichtung des Blechrohrs aufweisen, welche eine Innengeometrie des Blechrohrs abbildet, so dass die Stützstruktur im Wesentlichen formschlüssig entlang ihres Außenumfangs an dem Innenumfang des Blechrohrs anliegt. Wenn die Stützstruktur darüber hinaus aus Dünnblech gefertigt ist, verursacht sie bei gängigen Rohrquerschnitten lediglich eine äußerst geringe Verengung des Rohrquerschnitts und damit einen entsprechend geringen Druckverlust.

Die Stützstruktur kann insbesondere ein geformter, einteiliger Blechstreifen sein, und ist somit kostengünstig in der Herstellung.

Der erste und der zweite Anlageabschnitt können jeweils eine C-Form aufweisen, wobei die beiden Anlageabschnitte an zwei weiteren gegenüberliegenden Wandabschnitten am Innenumfang des Blechrohrs anliegen.

Die Anbindungsprofilseiten können an den zwei gegenüberliegenden Wandabschnitten des Blechrohrs zumindest abschnittsweise anliegen und sich dazu zumindest abschnittsweise parallel zu diesen Wandabschnitten erstrecken.

Die Stützstruktur kann somit eine Geometrie aufweisen, welche dazu eingerichtet ist, den Innenumfang des Blechrohrs über einen wesentlichen Anteil zu doppeln und damit die mechanische Festigkeit des Blechrohrs entsprechend zu erhöhen.

Der Z-förmige Abschnitt kann einen Mittelsteg aufweisen, mit dem die erste und die zweite Anbindungsprofilseite an gegenüberliegenden Enden des Mittelstegs jeweils unter einem rechten Winkel verbunden sind.

Wenn der Z-förmige Abschnitt einen Mittelsteg aufweist, so kann sich dieser senkrecht zu den gegenüberliegenden Wandabschnitten des Blechrohrs erstrecken und bis an diese heranreichen, so dass die gegenüberliegenden Wandabschnitte des Blechrohrsüber den Mittelsteg gegeneinander abgestützt sind.

Das Blechrohr kann als ein Flachkanal mit im Wesentlichen rechteckigem Querschnitt ausgebildet sein, bei dem die gegenüberliegenden Wandabschnitte, die über die Stützstruktur gegeneinander abgestützt sind, ein erstes Paar parallel beabstandeter Wandabschnitte sind und bei dem zwei weitere gegenüberliegende Wandabschnitte ein zweites Paar parallel beabstandeter Wandabschnitte sind, die sich senkrecht zu dem ersten Paar Wandabschnitte erstrecken.

Wie zuvor beschrieben, kann in dem Blechrohr mindestens eine Stützstruktur aufgenommen sein, wobei es bei längeren Rohrabschnitten, beispielsweise Blechrohren, die eine Länge von einem Meter und mehr aufweisen, aus strömungstechnischen Gründen sinnvoll ist, statt einer durchgängigen beziehungsweise einteiligen Stützstruktur, die sich über eine wesentliche oder sogar die gesamte Länge des Kanals erstreckt, mehrere einzelne Stützstrukturen vorzusehen, die im Inneren des Blechkanals unter einem Abstand zueinander angeordnet sind. Demgemäß kann vorgesehen sein, dass eine erste und eine zweite Stützstruktur im Inneren des Blechrohrs unter einem Abstand zueinander angeordnet sind, wobei über die erste und die zweite Stützstruktur ein Rohrquerschnitt jeweils in einen ersten und einen von dem ersten fluidisch getrennten zweiten Teilquerschnitt unterteilt ist, und wobei in einem Zwischenraum zwischen den beiden Stützstrukturen der Rohrquerschnitt einteilig ist.

Beispielsweise kann der zuvor beschriebene Mittelsteg der Stützstruktur dazu führen, dass der Rohrquerschnitt im Bereich der Stützstruktur über den Mittelsteg in die beiden fluidisch voneinander getrennten Teilquerschnitte unterteilt ist. Da insbesondere bei geraden Rohrabschnitten diese Unterteilung jedoch strömungsdynamisch nachteilhaft ist und zu Druckverlusten aufgrund der höheren Wandreibung führt, dient der Zwischenraum zwischen aufeinander folgenden Stützstrukturen dazu, die beiden Teilluftströme zu vereinigen und demgemäß den Gesamtdruckverlust des über die Stützstrukturen verstärkten Rohrabschnitts herabzusetzen. Im Übrigen können die Stützstrukturen aus Dünnblech gefertigt sein, so dass die möglichen Strömungsabrisse an den Stirnseiten der Stützstruktur aufgrund der sehr geringen Materialstärke der Stützstruktur zu vernachlässigen sind.

Die Stützstruktur kann unter einer mechanischen Vorspannung im Inneren des Blechrohrs aufgenommen sein. Die Vorspannung kann dazu parallel zu den beiden gegenüberliegenden und gegeneinander abgestützten Wandabschnitten sowie senkrecht zur Längsrichtung des Blechrohrs gerichtet sein. Dazu kann die Stützstruktur beispielsweise eine Geometrie im Querschnitt senkrecht zu ihrer Längsrichtung aufweisen, die im Wesentlichen eine S-Form aufweist. Die S-Form kann beispielsweise durch zwei über einen Z-förmigen Abschnitt miteinander verbundene C-förmige Anlageabschnitte gebildet sein.

Um die Montage der Stützstrukturen im Inneren des Blechrohrs zu erleichtern, kann vorgesehen sein, dass die Stützstruktur an ihrem Außenumfang, zumindest soweit sie mit diesem am Innenumfang des Blechrohrs anliegt, eine glatte Oberfläche aufweist. Dies ermöglicht es, dass die Stützstruktur komfortabel über die gegenüberliegenden Stirnseiten des Blechrohrs eingeschoben werden kann.

Die Abluftkanalanordnung kann insbesondere dazu vorgesehen sein, im Estrich eines Fußbodens eingegossen zu werden. Dabei kann die Abluftanordnung derart im Estrich angeordnet sein, dass ein Mittelsteg der Stützstruktur der die gegenüberliegenden Wandabschnitte des Blechrohrs gegeneinander abstützt, senkrecht zu einer Trittfläche des Fußbodens ausgerichtet ist.

Die erfindungsgemäße Abluftkanalanordnung ermöglicht es insbesondere, dass das Blechrohr aus einem Dünnblech ausgebildet werden kann. Die Blechdicke des Dünnblechs kann dabei weniger als 0,5 mm, vorzugsweise sogar weniger als 0,4 mm und bevorzugt weniger als 0,3 mm aufweisen. Grundsätzlich ist es jedoch auch möglich das Blechrohr und die Stützstruktur aus einem dickeren Blech, beispielsweise mit einer Materialstärke von 0,8 mm auszuführen. Je nach Anwendungsfall kann bei einem Blechrohr mit einer Materialstärke von 0,8 mm und mehr jedoch häufig auch auf die Verwendung einer Stützstruktur verzichtet werden, oder diese entsprechend leicht ausgeführt werden.

Die Verwendung von Dünnblech hat im Gegenzug den Nachteil, dass bei der Ablängung des Blechrohrs mitunter scharfe Schnittkanten entstehen, welche ein Verletzungsrisiko darstellen. Um die Verletzungsgefahr an den scharfen Schnittkanten des Blechrohrs zu verringern, kann vorgesehen sein, dass, wenn das Blechrohr an der Stirnseite mindestens eines seiner gegenüberliegenden Enden eine scharfe Schnittkante aufweist, diese Schnittkante von einer Aufsteckdichtung abgedeckt ist, die über die scharfe Schnittkante auf das mindestens eine Ende des Blechrohrs aufgesteckt ist. Die Aufsteckdichtung kann einen U-förmigen Querschnitt aufweisen. Weiterhin kann die Aufsteckdichtung an ihrem Innenumfang mindestens eine umlaufende Dichtlippe aufweisen. Die Aufsteckdichtung kann bei einer Ausführungsform einen Female-Anschluss und zu einem Element mit Male-Anschluss abdichten.

Weitere Einzelheiten der Erfindung werden anhand der nachstehenden Figuren erläutert. Dabei zeigt:
- Figur 1: in perspektivischer Darstellung eine erste Ausführungsform einer Abluftkanalanordnung;
- Figur 2: die Abluftkanalanordnung gemäß Figur 1 in teiltransparenter Darstellung;
- Figur 3: die Abluftkanalanordnung gemäß Figur 1 im Querschnitt senkrecht zur Längsrichtung;
- Figur 4: eine Detailansicht auf das Ende einer weiteren Ausführungsform einer Abluftkanalanordnung im Querschnitt parallel zur Längsrichtung; und
- Figur 5: eine weitere Ausführungsform einer erfindungsgemäßen Abluftkanalanordnung.

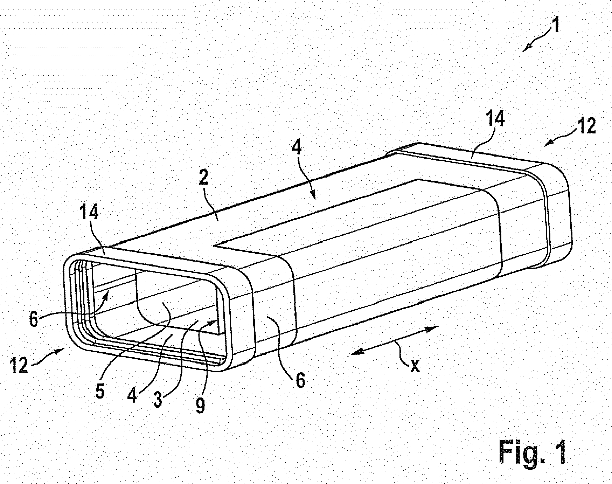

Figur 1 zeigt eine erste beispielhafte Ausführungsform einer erfindungsgemäßen Abluftkanalanordnung 1, wie sie beispielsweise in Küchenabluftkanalsystemen Verwendung finden kann.

Die Abluftkanalanordnung 1 kann insbesondere bis auf ihre an den gegenüberliegenden Enden aufgesteckten Aufsteckdichtungen 14 vollständig aus Metall, insbesondere aus Metallblech gefertigt sein und somit höchsten Brandschutzanforderungen genügen.

Das Blechrohr 2 kann aus Dünnblech gefertigt sein, wobei ihm über die im Inneren des Blechrohrs 2 aufgenommene Stützstruktur 3 zusätzliche mechanische Festigkeit verliehen wird, so dass die gezeigte Abluftkanalanordnung mindestens die mechanische Festigkeit von aus dem Stand der Technik bekannten Kunststoffkanalanordnungen erreicht.

Auch die Stützstruktur 3 kann als ein Blechformteil ausgebildet sein, so dass auch dieses preisgünstig in der Herstellung und allein mittels Biegen und Kanten von Dünnblech erhältlich ist. Die Stützstruktur ist als ein von dem Blechrohr 2 separates Bauteil ausgebildet, welches bedarfsweise über eine der Stirnseiten 12 des Blechrohrs 2 in das Blechrohr 2 eingeschoben werden kann. Je nach Anwendungsfall kann aber auch vorgesehen sein, dass die Stützstruktur nach dem Erreichen einer Endposition innerhalb des Blechrohrs mit dem Blechrohr gefügt, beispielsweise verklebt oder verschweißt wird.

Da es grundsätzlich wünschenswert ist, dass die Stützstruktur 3 über wesentliche Anteile ihres Außenumfangs formschlüssig am Innenumfang des Blechrohrs 2 anliegt, kann es für die Montage der Stützstruktur 3 im Inneren des Blechrohrs 2 erforderlich sein, dass die Aufsteckdichtung 14 an einem der Enden des Blechrohrs 2 für die Montage entfernt beziehungsweise erst nach dem Einschieben der Stützstruktur 3 auf die Stirnseite 12 aufgesteckt wird. Die Stützstruktur 3 ist vorzugsweise im Inneren des Blechrohrs 2 verschieblich und insbesondere lediglich unter einem Reibschluss gehalten, welcher über eine mechanische Vorspannung der Stützstruktur 3 bereitgestellt ist, mit welcher die Stützstruktur 3 an dem Innenumfang des Blechrohrs 2 angedrückt ist. Dazu kann die Stützstruktur 3 beispielsweise die in den Figuren 1 bis 3 gezeigte S-Form aufweisen.

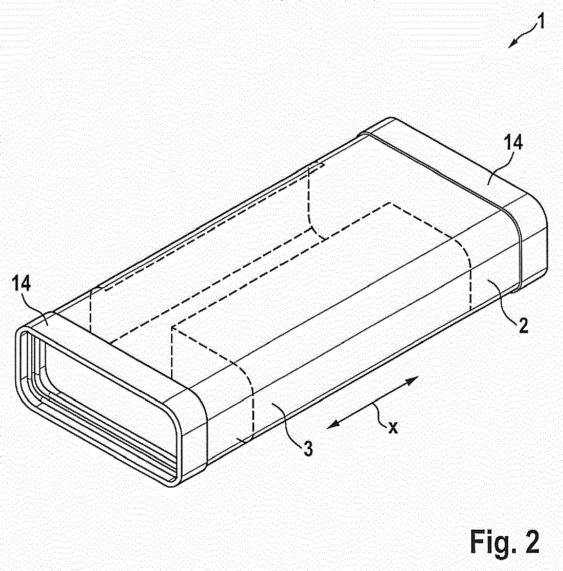

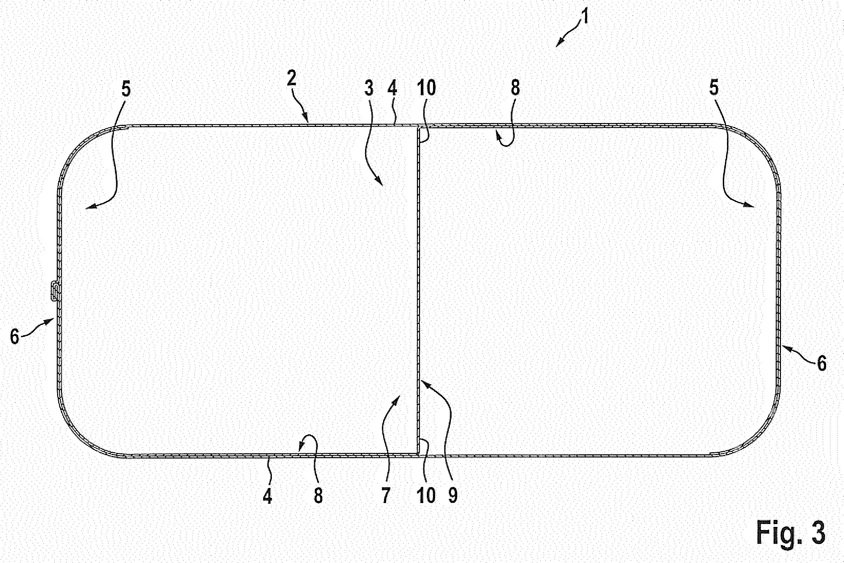

Weitere Einzelheiten der Stützstruktur und ihrer Anlage im Inneren des Blechrohrs 2 sind in den Figuren 2 und 3 zu erkennen. Demgemäß weist die Stützstruktur insbesondere einen ersten und einen zweiten Anlageabschnitt 5 auf, über die die Stützstruktur über einen Formschluss am Innenumfang des Blechrohrs 2 anliegt. Der erste und der zweite Anlageabschnitt 5 weisen jeweils eine C-Form auf, wobei die Anlageabschnitte 5 mit ihrer C-Form an den beiden gegenüberliegenden Wandabschnitten 6 am Innenumfang des Blechrohrs 2 anliegen.

Die beiden Wandabschnitte 6 erstrecken sich im Wesentlichen senkrecht zu den beiden über die Stützstruktur gegeneinander abgestützten Wandabschnitten 4 des Blechrohrs 2.

Die Stützstruktur 3 weist weiterhin einen Z-förmigen Abschnitt 7 auf, über den die beiden Anlageabschnitte 5 miteinander verbunden sind. Der Z-förmige Abschnitt 7 weist eine erste und eine zweite Anbindungsprofilseite 8 auf, mit der der Z-förmige Abschnitt 7 an den beiden gegenüberliegenden, gegeneinander abgestützten Wandabschnitten des Blechrohrs 2 anliegt. Eine erste der Anbindungsprofilseiten 8 geht in einen ersten der Anlageabschnitte 5 und eine zweite der Anbindungsprofilseiten 8 in einen zweiten der Anlageabschnitte 5 über, so dass die beiden C-förmigen Anlageabschnitte 5 mit dem Z-förmigen Abschnitt 7 die insbesondere in Figur 3 zu erkennende S-Form aufweisen.

Der Z-förmige Abschnitt 7 weist einen Mittelsteg 9 auf, der sich senkrecht zu den gegenüberliegenden und gegeneinander abgestützten Wandabschnitten 4 des Blechrohrs 2 erstreckt und bis an diese heranreicht, so dass die erfindungsgemäße Abstützung der gegenüberliegenden Wandabschnitte 4 des Blechrohrs 2 bei der in Figur 3 gezeigten Ausführungsform tatsächlich insbesondere über den Mittelsteg 9 bereitgestellt ist.

Wie es grundsätzlich aus dem Stand der Technik bekannt ist, so weist der Flachkanal im Querschnitt senkrecht zur Längsrichtung x einen rechteckigen Querschnitt mit gerundeten Kanten zwischen jeweils senkrecht aufeinander stehenden Wandabschnitten 4, 6 auf. Der Flachkanal weist somit zwei Paare mit jeweils zwei parallelen Wandabschnitten 4, 6 auf, wobei die Wandabschnitte 4 eines ersten Paars der Wandabschnitte 4 senkrecht zu den Wandabschnitten 6 eines zweiten Paars ausgerichtet sind.

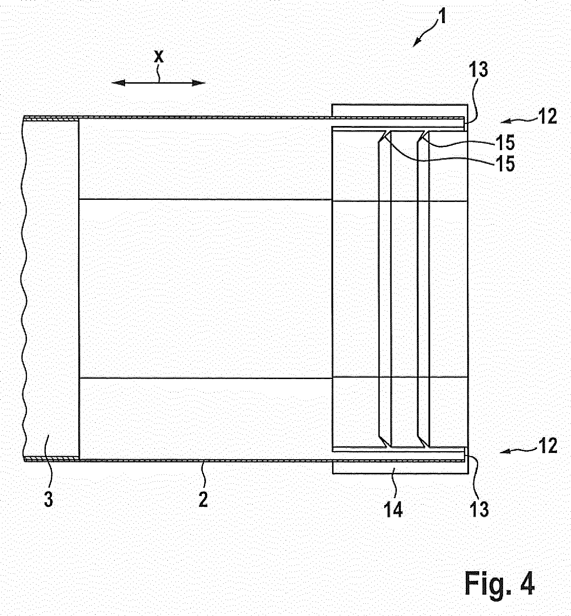

Wie bereits zuvor beschrieben worden ist, so ermöglicht es die erfindungsgemäße Abluftkanalanordnung insbesondere, dass das Blechrohr 2 aus Dünnblech gefertigt ist, was jedoch wiederum den Nachteil hat, dass insbesondere beim Ablängen des Blechrohrs, wie es bei der Montage erfindungsgemäßer Abluftkanalanordnungen üblich ist, mitunter scharfe Schnittkanten entstehen. Um das mit diesen einhergehende Verletzungsrisiko zu minimieren, ist bei der in Figur 4 gezeigten Ausführungsform vorgesehen, dass die mitunter scharfen Schnittkanten 13 an den Stirnseiten 12 des Blechrohrs 2 von einer Aufsteckdichtung 14 abgedeckt sind. Die Aufsteckdichtung 14 ist darüber hinaus als ein Female-Adapter ausgebildet, mit Dichtlippen 15 am Innenumfang der Aufsteckdichtung 14.

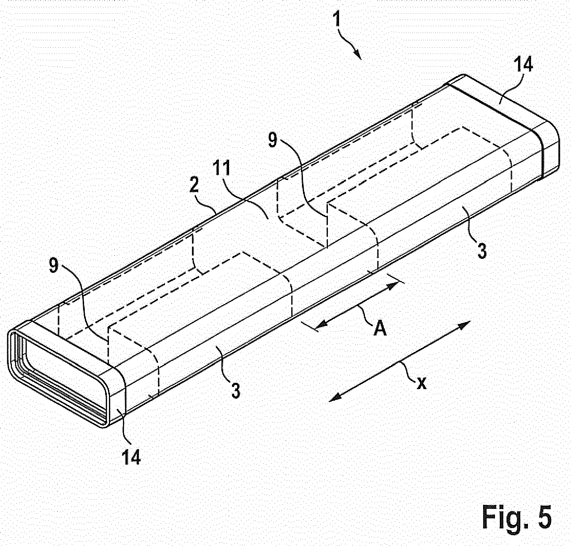

Wie in Figur 5 gezeigt ist, kann insbesondere bei Ausführungsformen der Abluftkanalanordnung, bei denen das Blechrohr 2 eine gewissen Länge aufweist, beispielsweise eine Länge von einem Meter, vorgesehen sein, dass im Inneren des Blechrohrs 2 mehrere Stützstrukturen 3 unter einem Abstand A zueinander angeordnet sind. Die Verwendung mehrerer einzelner Stützstrukturen 3 bei längeren Blechrohren 2 hat gegenüber der Verwendung einteiliger und entsprechend längerer Stützstrukturen 3 nicht nur den Vorteil der einfacheren Montage im Inneren des Blechrohrs 2, sondern darüber hinaus auch strömungsdynamische Vorteile:
Wie leicht nachvollziehbar sein wird, so führt die Verwendung der Stützstruktur 3 aufgrund ihres Mittelstegs 9 dazu, dass der in das Blechrohr 2 einströmende Luftvolumenstrom in zwei Teilvolumenströme unterteilt wird, was jedoch bei geraden Rohrabschnitten aufgrund der sich gegenüber einteiligen Rohrquerschnitten erhöhenden Wandreibung nachteilig ist, insbesondere einen höheren Druckverlust verursacht. Um diesen Nachteil zu lindern, ist daher bei der in Figur 5 gezeigten Ausführungsform vorgesehen, dass die aufeinanderfolgenden Stützstrukturen 3 einen Abstand A zueinander aufweisen, so dass ein Zwischenraum 11 zwischen den beiden Stützstrukturen gebildet ist, indem der Rohrquerschnitt einteilig ist, mithin uneingeschränkt dem Innenquerschnitt des Blechrohrs 2 entspricht. Der Zwischenraum 11 kann daher dazu dienen, dass der über die in Luftströmungsrichtung vorangegangene Stützstruktur 3 in zwei Teilvolumenströme unterteilte Luftvolumenstrom sich wieder durchmischen kann, wodurch der Gesamtdruckverlust der Abluftkanalanordnung 1 gegenüber einteiligen und durchgängigen Stützstrukturen 3 herabgesetzt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1.: Abluftkanalanordnung
- 2.: Blechrohr
- 3: Stützstruktur
- 4: Wandabschnitt
- 5: Anlageabschnitt
- 6: Weiterer Wandabschnitt
- 7: Z-förmiger Abschnitt
- 8: Anbindungsprofilseite
- 9: Mittelsteg
- 10: Ende
- 11: Zwischenraum
- 12: Stirnseite
- 13: Schnittkante
- 14: Aufsteckdichtung
- 15: Dichtlippe
- A: Abstand
- x: Längsrichtung

## Patentansprüche

1. Abluftkanalanordnung (1) für ein Küchenabluftkanalsystem, die aus einem Blechrohr (2) und einer im Innern des Blechrohrs (2) entlang der Längsrichtung (x) des Blechrohrs (2) verschieblich aufgenommenen Stützstruktur (3) besteht, über die zwei gegenüber liegende Wandabschnitte (4) des Blechrohrs (2) gegeneinander abgestützt sind, wobei die Stützstruktur (3) einen ersten und einen zweiten Anlageabschnitt (5) aufweist, die jeweils über einen Formschluss am Innenumfang des Blechrohrs (2) anliegen, **dadurch gekennzeichnet, dass** die Anlageabschnitte (5) über einen Z-förmigen Abschnitt (7) miteinander verbunden sind, wobei der Z-förmige Abschnitt (7) eine erste und eine zweite Anbindungsprofilseite (8) aufweist, wobei die erste Anbindungsprofilseite (8) in den ersten Anlageabschnitt (5) und die zweite Anbindungsprofilseite (8) in den zweiten Anlageabschnitt (5) übergeht

2. Abluftkanalanordnung (1) nach Anspruch 1, bei der die Stützstruktur (3) ein geformter, einteiliger Blechstreifen ist.

3. Abluftkanalanordnung (1) nach Anspruch 1, bei der der erste und der zweite Anlageabschnitt (5) jeweils eine C-Form aufweist, wobei die beiden Anlageabschnitte (5) an zwei weiteren gegenüber liegenden Wandabschnitten (6) am Innenumfang des Blechrohrs (2) anliegen.

4. Abluftkanalanordnung (1) nach Anspruch 1, bei der die Anbindungsprofilseiten (8) an den zwei gegenüber liegenden Wandabschnitten (4) des Blechrohrs (2) zumindest abschnittsweise anliegen und sich dazu zumindest abschnittsweise parallel zu diesen Wandabschnitten (4) erstrecken.

5. Abluftkanalanordnung (1) nach Anspruch 1, bei der der Z-förmige Abschnitt (7) einen Mittelsteg (9) aufweist, mit dem die erste und die zweite Anbindungsprofilseite (8) an gegenüber liegenden Enden (10) des Mittelstegs (9) jeweils unter einem rechten Winkel verbunden sind.

6. Abluftkanalanordnung (1) nach Anspruch 1, bei der der Z-förmige Abschnitt (7) einen Mittelsteg (9) aufweist, der sich senkrecht zu den gegenüber liegenden Wandabschnitten (4) des Blechrohrs (2) erstreckt und bis an diese heranreicht, so dass die gegenüber liegenden Wandabschnitte (4) des Blechrohrs (2) über den Mittelsteg (9) gegeneinander abgestützt sind.

7. Abluftkanalanordnung (1) nach einem der vorangegangen Ansprüche, bei dem das Blechrohr (2) ein Flachkanal mit rechteckigem Querschnitt ist, bei dem die gegenüber liegende Wandabschnitte (4) ein erstes Paar parallel beabstandeter Wandabschnitte (4) und die weiteren gegenüber liegende Wandabschnitte (6) ein zweites Paar parallel beabstandeter Wandabschnitte (6) sind, die sich senkrecht zu dem ersten Paar Wandabschnitte (4) erstrecken.

8. Abluftkanalanordnung (1) nach einem der vorangegangen Ansprüche, bei dem eine erste und eine zweite der Stützstruktur (3) im Innern des Blechrohrs (2) und unter einem Abstand (A) zueinander angeordnet sind, wobei über die erste und die zweite Stützstruktur (3) der Rohrquerschnitt jeweils in einen ersten und einen von dem ersten fluidisch getrennten zweiten Teilquerschnitt unterteilt ist, und wobei in einem Zwischenraum (11) zwischen den beiden Stützstrukturen (3) der Rohrquerschnitt einteilig ist.

9. Abluftkanalanordnung (1) nach einem der vorangegangen Ansprüche, bei dem die Stützstruktur (3) unter einer mechanischen Vorspannung im Innern des Blechrohrs (2) aufgenommen ist, die parallel zu den beiden gegenüber liegenden und gegeneinander abgestützten Wandabschnitten (4) sowie senkrecht zur Längsrichtung (x) des Blechrohrs (2) gerichtet ist.

10. Abluftkanalanordnung (1) nach einem der vorangegangen Ansprüche, bei dem die Stützstruktur (3) an ihrem Außenumfang, zumindest soweit sie mit diesem am Innenumfang des Blechrohrs (2) anliegt, eine glatte Oberfläche aufweist.

11. Abluftkanalanordnung (1) nach einem der Ansprüche, bei dem das Blechrohr (2) aus einem Dünnblech besteht, das eine Blechdicke von weniger als 0,5 mm, vorzugsweise von weniger als 0,4 mm und besonders bevorzugt von weniger als 0,3 mm aufweist

12. Abluftkanalanordnung (1) nach Anspruch 11, bei dem das Blechrohr (2) an der Stirnseite (12) mindestens eines seiner gegenüber liegenden Enden eine scharfe Schnittkante (13) aufweist, die von einer Aufsteckdichtung (14) abgedeckt ist, die über die scharfe Schnittkante (13) auf das mindestens eine Ende des Blechrohrs (2) aufgesteckt ist.

13. Fußboden mit einer Abluftkanalanordnung (1) nach einem der vorangegangen Ansprüche, die in einem Estrich des Fußbodens eingegossen ist, wobei ein Mittelsteg (9) der Stützstruktur (3), der die gegenüber liegenden Wandabschnitte (4) des Blechrohrs (2) gegeneinander abgestützt, senkrecht zu einer Trittfläche des Fußbodens angeordnet ist.

## Claims

1. An exhaust air duct arrangement (1) for a kitchen exhaust air duct system, comprising a sheet metal tube (2) and a support structure (3) which is accommodated in the interior of the sheet metal tube (2) so as to be displaceable along the longitudinal direction (x) of the sheet metal tube (2) and via which two opposite wall sections (4) of the sheet metal tube (2) are supported against one another, the support structure (3) having a first and a second bearing section (5), which each bear against the inner circumference of the sheet metal tube (2) via a positive fit, **characterised in that** the bearing sections (5) are connected to one another via a Z-shaped section (7), the Z-shaped section (7) having a first and a second binding profile side (8), the first binding profile side (8) merging into the first bearing section (5) and the second binding profile side (8) merging into the second bearing section (5).

2. The exhaust air duct arrangement (1) according to claim 1, in which the support structure (3) is a shaped, one-piece sheet metal strip.

3. The exhaust air duct arrangement (1) according to claim 1, in which the first and the second bearing section (5) each has a C-shape, the two bearing sections (5) abutting against two further opposite wall sections (6) on the inner circumference of the sheet metal pipe (2).

4. The exhaust air duct arrangement (1) according to claim 1, in which the binding profile sides (8) bear at least in sections against the two opposite wall sections (4) of the sheet metal pipe (2) and extend parallel to these wall sections (4) at least in sections.

5. The exhaust air duct arrangement (1) according to claim 1, in which the Z-shaped section (7) has a central web (9) with which the first and the second binding profile sides (8) are connected at opposite ends (10) of the central web (9) at a right angle in each case.

6. The exhaust air duct arrangement (1) according to claim 1, in which the Z-shaped section (7) has a central web (9) which extends perpendicularly to the opposite wall sections (4) of the sheet metal pipe (2) and reaches up to these, so that the opposite wall sections (4) of the sheet metal pipe (2) are supported against one another via the central web (9).

7. The exhaust air duct arrangement (1) according to one of the preceding claims, wherein the sheet metal pipe (2) is a flat duct with a rectangular cross-section, wherein the opposite wall sections (4) are a first pair of parallel spaced wall sections (4) and the further opposite wall sections (6) are a second pair of parallel spaced wall sections (6) extending perpendicular to the first pair of wall sections (4).

8. The exhaust air duct arrangement (1) according to one of the preceding claims, in which a first and a second of the support structures (3) are arranged in the interior of the sheet metal pipe (2) and at a distance (A) from one another, wherein the pipe cross-section is divided via the first and the second support structures (3) into a first and a second partial cross-section, respectively, fluidically separated from the first, and wherein the pipe cross-section is in one piece in a gap (11) between the two support structures (3).

9. The exhaust air duct arrangement (1) according to one of the preceding claims, in which the support structure (3) is received in the interior of the sheet metal tube (2) under a mechanical prestress which is directed parallel to the two opposite wall sections (4) supported against each other and perpendicular to the longitudinal direction (x) of the sheet metal tube (2).

10. The exhaust air duct arrangement (1) according to one of the preceding claims, in which the supporting structure (3) has a smooth surface on its outer circumference, at least to the extent that it bears with the latter against the inner circumference of the sheet metal pipe (2).

11. The exhaust air duct arrangement (1) according to one of the claims, in which the sheet metal pipe (2) consists of a thin sheet metal which has a sheet metal thickness of less than 0.5 mm, preferably of less than 0.4 mm and particularly preferably of less than 0.3 mm.

12. The exhaust air duct arrangement (1) according to claim 11, in which the sheet metal tube (2) has a sharp cut edge (13) on the end face (12) of at least one of its opposite ends, which is covered by a slip-on seal (14) which is slipped over the sharp cut edge (13) onto the at least one end of the sheet metal tube (2).

13. A floor with an exhaust air duct arrangement (1) according to one of the preceding claims, which is cast in a screed of the floor, wherein a central web (9) of the supporting structure (3), which supports the opposite wall sections (4) of the sheet metal tube (2) against each other, is arranged perpendicular to a tread surface of the floor.

## Revendications

1. Configuration de canal d'évacuation d'air (1) pour un système de canal d'évacuation d'air de cuisine, qui est constituée d'un tube en tôle (2) et d'une structure d'appui (3) logée de manière coulissante à l'intérieur du tube en tôle (2) le long de la direction longitudinale (x) du tube en tôle (2), par l'intermédiaire de laquelle les deux portions de parois opposées (4) du tube en tôle (2) sont appuyées d'une contre l'autre, dans laquelle la structure d'appui (3) comprend une première et une deuxième portions d'appui (5) qui s'appuient chacune, par complémentarité de forme, contre la circonférence interne du tube en tôle (2), **caractérisée en ce que** les portions d'appui (5) sont reliées entre elles par l'intermédiaire d'une portion en forme de Z (7), dans laquelle la portion en forme de Z (7) comprend un premier et un deuxième côtés profilés de liaison (8), dans laquelle le premier côté profilé de liaison (8) se transforme dans la première portion d'appui (5) et le deuxième côté profilé de liaison (8) se transforme dans la deuxième portion d'appui (5).

2. Configuration de canal d'évacuation d'air (1) selon la revendication 1, dans laquelle la structure d'appui (3) est une bande de tôle formée d'une seule pièce.

3. Configuration de canal d'évacuation d'air (1) selon la revendication 1, dans laquelle les première et une deuxième portions d'appui (5) présentent chacune une forme de C, dans laquelle les deux portions d'appui (5) s'appuient contre deux portions de paroi opposées supplémentaires (6) sur la circonférence interne du tube en tôle (2).

4. Configuration de canal d'évacuation d'air (1) selon la revendication 1, dans laquelle les côtés profilés de liaison (8) s'appuient, au moins à certains endroits, contre les deux portions de parois opposées (4) du tube en tôle (2) et s'étendent pour cela, au moins à certains endroits, parallèlement à ces portions de parois (4).

5. Configuration de canal d'évacuation d'air (1) selon la revendication 1, dans laquelle la portion en forme de Z (7) comprend une nervure centrale (9) avec laquelle les premier et un deuxième côtés profilés de liaison (8) sont reliés aux extrémités opposées (10) de la nervure centrale (9) chacun avec un angle droit.

6. Configuration de canal d'évacuation d'air (1) selon la revendication 1, dans laquelle la portion en forme de Z (7) comprend une nervure centrale (9) qui s'étend perpendiculairement aux portions de parois opposées (4) du tube en tôle (2) et arrive jusqu'à celles-ci de façon à ce que les portions de parois opposées (4) du tube en tôle (2) soient appuyées l'une contre l'autre par l'intermédiaire de la nervure centrale (9).

7. Configuration de canal d'évacuation d'air (1) selon l'une des revendications précédentes, dans laquelle le tube en tôle (2) est un canal plat avec une section rectangulaire, dans lequel les portions de parois opposées (4) sont une première paire de portions de parois (4) distantes parallèles et les portions de parois opposées supplémentaires (6) sont une deuxième paire de portions de parois (6) distantes parallèles qui s'étendent perpendiculairement à la première paire de portions de parois (4).

8. Configuration de canal d'évacuation d'air (1) selon l'une des revendications précédentes, dans laquelle une première et une deuxième structures d'appui (3) sont disposées à l'intérieur du tube en tôle (2) et avec une distance (A) entre elles, dans laquelle les première et deuxième structures d'appui (3) permet de diviser la section du tube en une première et une deuxième section partielle, séparée fluidiquement de la première, et dans laquelle, dans un espace intermédiaire (11) entre les deux structures d'appui (3), la section de tube est d'une seule pièce.

9. Configuration de canal d'évacuation d'air (1) selon l'une des revendications précédentes, dans laquelle la structure d'appui (3) est logée avec une précontrainte mécanique à l'intérieur du tube en tôle (2), qui est orientée parallèlement aux deux portions de parois (4) opposées et appuyées l'une contre l'autre ainsi que perpendiculairement à la direction longitudinale (x) du tube en tôle (2).

10. Configuration de canal d'évacuation d'air (1) selon l'une des revendications précédentes, dans laquelle la structure d'appui (3) présente, sur sa circonférence extérieure, au moins dans la mesure où elle s'appuie avec celle-ci contre la circonférence intérieure du tube en tôle (2), une surface lisse.

11. Configuration de canal d'évacuation d'air (1) selon l'une des revendications précédentes, dans laquelle le tube en tôle (2) est constitué d'une tôle mince qui présente une épaisseur de tôle inférieure à 0,5 mm, de préférence inférieure à 0,4 mm et plus particulièrement de préférence inférieure à 0,3 mm.

12. Configuration de canal d'évacuation d'air (1) selon la revendication 11, dans laquelle le tube en tôle (2) comprend, sur le côté frontal (12) d'au moins une de ses extrémités opposées, une arête de coupe vive (13) qui est recouverte d'un joint d'étanchéité inséré (14) qui est inséré par l'intermédiaire de l'arête de coupe vive (13) sur l'au moins une extrémité du tube en tôle (2).

13. Sol avec une configuration de canal d'évacuation d'air (1) selon l'une des revendications précédentes, qui est coulé dans une chape du sol, dans lequel une nervure centrale (9) de la structure d'appui (3), qui soutient les portions de parois opposées (4) du tube en tôle (2) l'une contre l'autre, est disposée perpendiculairement à une surface de marche du sol.
